# EUROPEAN PATENT APPLICATION

(11) **EP 4 661 180 A1**
(43) Date of publication of application: **10.12.2025**
(21) Application number: 25169046.7
(22) Date of filing: 08.04.2025
(51) Int. Cl.: H01M 50/264, G01L 1/04, G01L 5/00

(54) **METHOD OF DETERMINING PRELOAD FORCE OF BATTERY MODULE AND METHOD OF MANUFACTURING BATTERY MODULE**

(30) Priority: 07.06.2024 CN 202410740030
(71) Applicant: EVE Energy Storage Co., Ltd., Wuhan Hubei 430000 (CN)
(72) Inventor: YOU, Shaobo, Wuhan, Hubei, 430000 (CN)
(74) Representative: Herrero & Asociados, S.L.

(57) **Abstract**

A method of determining a preload force of a battery module (1) includes: S1, mounting a strapping band (2) to the battery module; S2, measuring a length of the battery module after the strapping band is mounted, as a first length; and S3, removing the strapping band, applying a compression force to compress the battery module until a length of the battery module is equal to the first length, and taking the compression force as the preload force.

## Description

### TECHNICAL FIELD

The present disclosure relates to the field of battery modules, and in particular to a method of determining a preload force of a battery module and a method of manufacturing a battery module.

### BACKGROUND

In order to achieve a target energy and voltage requirements, a battery module is generally formed by a plurality of cells laminated together, a cushioning pad is disposed between every two adjacent cells of the plurality of cells, and an end plate is arranged on an outer side of each of two outermost cells of the plurality of cells. In order to ensure integrity and rigidity of the battery module, a strapping band is arranged surrounding the battery module. An assembling method is as follows. After the plurality of cells, the cushioning pads, and the end plates are laminated, a compression tool is used to compress the battery module along an arrangement direction of the plurality of cells reduce a length of the battery module. Furthermore, the strapping band is arranged to sleeve to the battery module. Subsequently, the compression tool is loosened, the battery module may be rebound in a length direction of the battery module, such that the strapping band is stretched. In this way, the strapping band generates a preload force in the length direction of the battery module.

A magnitude of the preload force generated by the strapping band directly affects the integrity and the rigidity of the battery module. Therefore, determination of the magnitude of the preload force of the strapping band is one of essential configurations of the battery module. In the art, a maximum compression force, during the battery module being compressed by the compression tool, is taken as the preload force of the strapping band. However, according to a principle of the strapping band generating the preload force, the preload force and the compression force are not directly equivalent to each other. When the compression force and the preload force are directly equivalent to each other, the preload force cannot be accurately determined. In this way, looseness and tightness of the battery module cannot be accurately determined, and the integrity and the rigidity of the battery module cannot be guaranteed.

### SUMMARY

In a first aspect, the present disclosure provides a method of determining a preload force of a battery module including:

S1, mounting a strapping band to the battery module;

S2, measuring a length of the battery module after the strapping band being mounted, as a first length; and

S3, removing the strapping band, applying a compression force to compress the battery module until a length of the battery module being equal to the first length, and taking the compression force as the preload force.

In a second aspect, the present disclosure provides a method of manufacturing a battery module, including operations of:

determining the preload force of the battery module according to the first aspect; and

B, determining whether the preload force is within a predetermined range; in repose to the preload force being within the predetermined range, using the strapping band to strap the battery module to complete manufacturing the battery module; and in repose to the preload force being not within the predetermined range, adjusting a size of a cushioning pad or a size of the strapping band and repeating the operation A and the operation B.

According to the method for determining the preload force of the battery module in the present disclosure, the first length, which is determined based on the magnitude of the preload force, is additionally taken as a determination basis, the compression force when the length of the battery module is equal to the first length is determined as the preload force. In this way, the magnitude of the preload force that can be provided by the strapping band can be more accurately predicted, such that looseness and tightness of the battery module can be more accurately determined, and the integrity and the rigidity of the battery module are ensured.

According to the method of manufacturing the battery module in the present disclosure, after the accurate value of the preload force is determined based on the method of determining the preload force of the battery module, the magnitude of the value of the preload force is determined to ensure that the preload force of the strapping band is located is within a predetermined value range. In this way, the battery module is prevented from having insufficient rigidity due to the strapping band providing an excessively small preload force, or the battery module is prevented from being damaged due to the strapping band providing an excessively large preload force.

### BRIEF DESCRIPTION OF THE DRAWINGS

FIG. 1 is a flow chart of a method of determining a preload force of a battery module according to some embodiments.
FIG. 2 is a schematic view of the batter module being compressed in the method of determining the preload force of the battery module according to some embodiments.
FIG. 3 is a schematic view of using a limiting member during the method of determining the preload force of the battery module according to some embodiments.
FIG. 4 is a flow chart of a method of manufacturing the battery module according to some embodiments.

Reference numerals in the drawings: 1 - battery module; 2 - strapping band; 3 - limiting member; 31 - first limiting portion; 32 - second limiting portion.

### DETAILED DESCRIPTION

### Embodiment 1

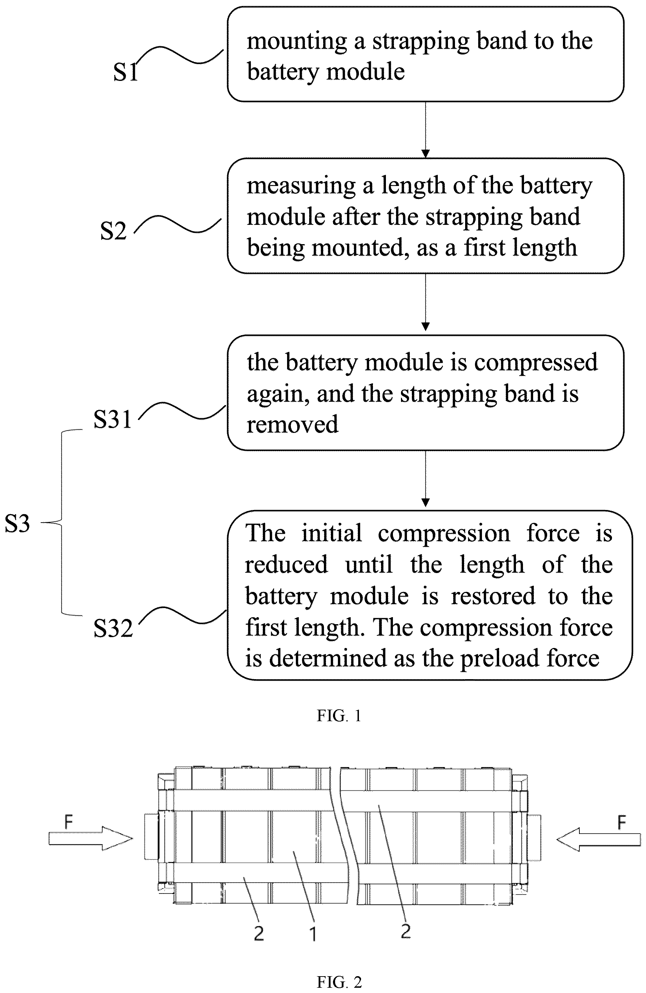

As shown in FIG. 1, a method of determining a preload force of a battery module includes the following operations.

In an operation S1, a strapping band 2 is mounted to a battery module 1.

In an operation S2, a length of the battery module 1 after being mounted with the strapping band 2 is measured as a first length.

In an operation S3, the strapping band 2 is removed, the battery module 1 is compressed by a compression force until the length of the battery module 1 is equal to the first length, and the compression force is taken as a preload force.

The length of the battery module 1 is a size of the battery module 1 along a direction in which a plurality of cells of the battery module are arranged.

In an operation S3, a specific manner of compressing the battery module 1 includes, but not limited to: starting from a relatively small initial compression force, gradually increasing the initial compression force until the length of the battery module 1 being equal to the first length; or starting from a relatively large initial compression force, gradually decreasing the initial compression force until the length of the battery module 1 being equal to the first length. When the length of the battery module 1 is equal to the first length, it is determined that the compression force is obtained.

In the present embodiment, the battery module 1 is firstly compressed, and the strapping band 2 is mounted, and subsequently, the battery module 1 is loosened. The length of the battery module 1, when the strapping band 2 is mounted, is measured. In this case, the length of the battery module 1 is negatively correlated to a magnitude of the preload force. Subsequently, the strapping band 2 is then removed, and the battery module 1 is compressed again. In this case, the length of the battery module 1 is negatively correlated to the magnitude of the compression force. Therefore, when the battery module 1 is compressed until the length is equal to the first length, it can be determined that the compression force at this moment is equal to the preload force provided by the strapping band 2.

Compared to the related art in which the maximum compression force during the battery module being compressed by the compression tool is directly taken as the preload force of the strapping band, in the present embodiment, the first length, which is determined based on the magnitude of the preload force, is taken as a basis for determination, the compression force when the length of the battery module 1 is equal to the first length is determined as the preload force. In this way, of the preload force provided by the strapping band 2 can be more accurately estimated, such that the looseness and the tightness of the battery module 1 can be accurately determined, the integrity and the rigidity of the battery module 1 can be ensured.

In an embodiment, the operation S1 is performed as follows. The battery module 1 is compressed until the length of the battery module 1 is less than the size of the strapping band 2 along the length direction of the battery module 1. The strapping band 2 is taken to sleeve the battery module 1. The strapping band 2 and the battery module 1 are prevented from scratching each other during mounting, or the strapping band 2 is prevented from being mounted excessively difficultly.

It should be noted that when the battery module 1 is compressed during the operation S1 to facilitate mounting of the strapping band 2, the battery module 1 needs to be loosened in the operation S2. In this way, the compression force and the preload force of the strapping band 2 cannot be applied at the same time, such that the first length and the magnitude of the preload force can be accurately matched to each other.

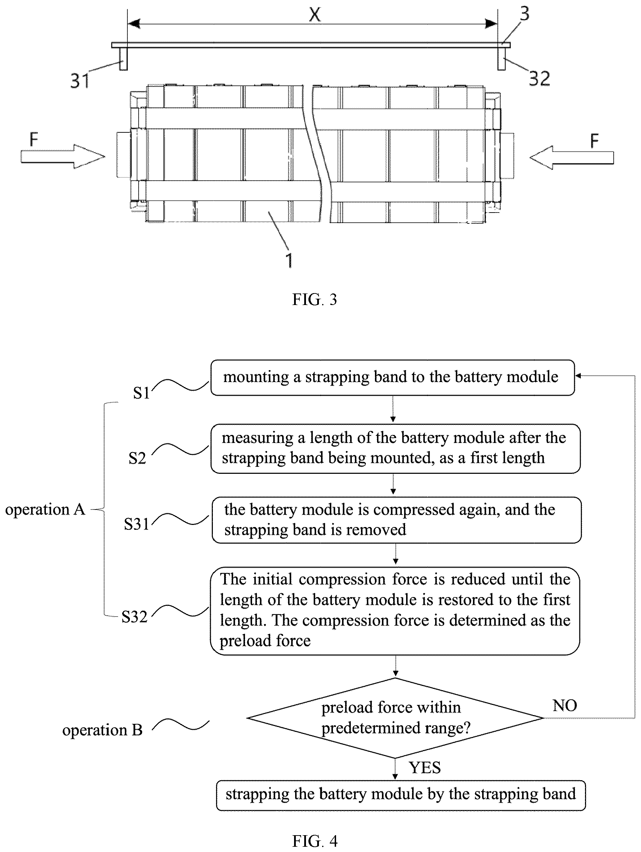

In an embodiment, in the operation S1 and the operation S3, as shown in FIG. 2 and FIG. 3, the compression force is applied to each end plate of the battery module 1 to compress the battery module 1. An indication F in the FIG. 2 represents the compression force. Specifically, when the battery module 1 is compressed in the operation S1, the operation S3, and subsequent operations S31, S32, and S322, the battery module 1 may be compressed by applying the compression force to the end plate of each of two sides of the battery module 1. During compressing, the compression tool may be used. In the present embodiment, the battery module 1 is compressed from each end plate, such that the battery module 1 is prevented from being damaged during compressing.

In an embodiment, the strapping band 2 includes a steel band. In the present embodiment, since the strapping band 2 includes the steel band, strength of the steel enables the preload force applied to the battery module 1 to meets demands.

In an embodiment, the operation S3 includes following operations.

In an operation S31, the battery module 1 is compressed until the length of the battery module 1 is less than the first length, and the strapping band 2 is removed.

In an operation S32, the initial compression force is reduced until the length of the battery module 1 is restored to the first length. When the length of the battery module 1 is restored to the first length, it is determined that the compression force is obtained, and the compression force is determined as the preload force.

In the operation S32, specific methods of reducing the initial compression force include, but not limited to, continuously reducing the initial compression force and stepwisely reducing the initial compression force.

In the present embodiment, in the operation S3, the battery module 1 is compressed again to reduce the length of the battery module 1, and subsequently, the compression pressure is reduced enabling the battery module 1 to be restored to the first length, such that the strapping band 2 is conveniently removed, the strapping band 2 is prevented from being unable to be removed from the battery module 1 due to being excessively tightly connected to the battery module 1, and the strapping band 2 and the battery module 1 are prevented from scratching each other.

In an embodiment, in the operation S32, the initial compression force decreases linearly as time passes. For example, the initial compression force decreases by 10N per second or 20N per second. Specifically, in the present embodiment, a specific range of a reduction rate of the initial compression force being reduced to the compression force is determined based on engineering experiences of the applicant in practice. That is, the reduction rate at which the initial compression force in the present embodiment is reduced to the compression force linearly as time passes is less than or equal to 40 N/S.

In the present embodiment, the battery module 1 is gradually released by enabling the compression force to decrease linearly as time passes, until the length of the battery module 1 is restored to the first length. On the one hand, the compression force is prevented from being suddenly changed, such that an interior of the battery module 1 is prevented from being suddenly changed, and the preload force of the battery module 1 can be accurately obtained, the battery module 1 is prevented from being damaged. On the other hand, the compression force in the present embodiment varies linearly and continuously. In this way, the length of the battery module 1 can be conveniently controlled, such that the length of the battery module 1 can be restored to the first length as accurately as possible, and a more accurate value of the preload force is obtained.

In an embodiment, the operation S32 includes following operations.

In an operation S321, a limiting member 3 is arranged on the battery module 1, the limiting member 3 is arranged along the length direction of the battery module 1. A first limiting portion 31 and a second limiting portion 32 are respectively arranged at two ends of the limiting member 3. A distance between the first limiting portion 31 and the second limiting portion 32 is equal to the first length.

In an operation S322, the initial compression force is reduced until the two ends of the battery module 1 along the length direction of the battery module 1 respectively abut against the first limiting portion 31 and the second limiting portion 32. When the two ends of the battery module 1 along the length direction of the battery module 1 respectively abut against the first limiting portion 31 and the second limiting portion 32, it is determined that the compression force is obtained, and the compression force is taken as the preload force.

The limiting member 3 can be arranged by: directly connecting the limiting member 3 to the battery module 1; placing the limiting member 3 on the battery module 1; and the limiting member 3 being hand-held by an operator, and methods of arranging the limiting member 3 are not limited thereto. Specifically, the first limiting portion 31 and the second limiting portion 32 include, but are not limited to, a limiting block, a limiting post, and a limiting plate.

In the present embodiment, the limiting member 3 is arranged on the battery module 1. When neither of the two ends of the battery module 1 abuts against the first limiting portion 31 and the second limiting portion 32, or when only one end abuts against the respective first limiting portion 31 or the respective second limiting portion 32, it is indicated that the current length of the battery module 1 is less than the first length. When the two ends of the battery module 1 respectively abut against the first limiting portion 31 and the second limiting portion 32, it is indicated that the current length of the battery module 1 is restored to the first length. Therefore, in the present embodiment, it can be quite intuitively shown whether the battery module 1 is restored to the first length, the operator does not need to repeatedly measure the length of the battery module 1. Therefore, an efficiency of measuring the preload force is improved.

A method of using the limiting member 3 is shown in FIG. 3. The X in FIG. 3 represents the first length. More specifically, in the present embodiment, a caliper is taken as the limiting member 3. The distance between the first limiting portion 31 and the second limiting portion 32 can be quantitatively adjusted based on a scale and an adjustment performance of the caliper itself. In this way, the first length can be adjusted to various values. In addition, the caliper is available in the art and can be commercially obtained and can be used for other tests.

### Embodiment 2

As shown in FIG. 4, a method of manufacturing the battery module includes the following operations.

In an operation A, the preload force generated by the strapping band 2 is measured according to the method of determining the preload force of the battery module in the Embodiment 1.

In an operation B, it is determined that whether the preload force is within a predetermined range. When the preload force is within the predetermined range, the strapping band 2 is used to strap the battery module to complete manufacturing the battery module. When the preload force is not within the predetermined range, a size of the cushioning pad is adjusted or a size of the strapping band 2 is adjusted, and the operation A and the operation B are repeated.

Specific values of the predetermined range can be obtained according to engineering experiences in practice, theoretical analysis, simulation calculations, and so on. The predetermined range shall prevent the battery module 1 from having insufficient rigidity due to the preload force being excessively small and prevent the battery module 1 from being damaged due to the preload force being excessively large.

After obtaining an accurate value of the preload force by following the method of determining the preload force of the battery module in the present disclosure, in the present embodiment, numerical magnitude of the preload force is further determined. When the value of the preload force is within the predetermined range, the preload force of the strapping band 2 of a certain model meets design requirements, and the strapping band 2 of the certain model can be used to strap the battery module 1. Subsequent operations of the battery module 1 can be performed until the battery module 1 is completely manufactured. When the value of the preload force is not within the predetermined range, the preload force may be adjusted by adjusting the size of the cushioning pad or the size of the strapping band. Adjusting the cushioning pad is applicable as a temporary adjustment, performed at an engineering site or for situations in which the preload force does not deviate much from the predetermined range. Adjusting the strapping band is applicable as a long-term adjustment by a designer or can be performed in situations in which the preload force deviates too much from the predetermined range.

In an embodiment, in the operation S1, the compression force of compressing the battery module 1 is greater than an upper limit of the predetermined range and is less than an expansion force generated when the plurality of cells are laminated.

According to the practical test data of the applicant, the preload force provided by the strapping band 2 is actually less than the compression force that is applied to the battery module 1 in the operation S1. Therefore, in the present embodiment, a value range of the compression force in the operation S1 is given, so as to ensure that the preload force being within the predetermined range can be generated after the battery module 1 is mounted with the strapping band 2, and to prevent the battery module 1 from being damaged during being compressed.

In an embodiment, a specific method of adjusting the strapping band 2, when the preload force is not within the predetermined range, is provided. When the preload force is greater than the upper limit of the predetermined range, the size of the strapping band 2 along the length direction of the battery module 1 increases. When the preload force is less than a lower limit of the predetermined range, the size of the strapping band 2 along the length direction of the battery module 1 is decreased.

## Claims

1. A method of determining a preload force of a battery module, **characterized by** comprising:
S1, mounting a strapping band (2) to the battery module (1);
S2, measuring a length of the battery module (1) after the strapping band (2) being mounted, as a first length; and
S3, removing the strapping band (2), applying a compression force to compress the battery module (1) until a length of the battery module (1) being equal to the first length, and taking the compression force as the preload force.

2. The method according to claim 1, wherein, the S3 comprises:
S31, applying an initial compression force to compress the battery module (1) until the length of the battery module (1) being less than the first length, and removing the strapping band (2); and
S32, reducing the initial compression force until the length of the battery module (1) is restored to the first length, wherein the compression force is obtained when the length of the battery module (1) reaches the first length, and taking the compression force as the preload force.

3. The method according to claim 2, wherein the initial compression force is continuously reduced or stepwisely reduced.

4. The method according to claim 2 or 3, wherein, in the S32, the initial compression force is decreased to the compression force linearly as time passes.

5. The method according to claim 4, wherein, a reduction rate at which the initial compression force is decreased to the compression force linearly as time passes is less than or equal to 40 N/S.

6. The method according to any one of claims 2-5, wherein, the S32 comprises:
S321, arranging a limiting member (3) on the battery module (1), wherein the limiting member (3) is arranged along length direction of the battery module (1); a first limiting portion (31) and a second limiting portion (32) are respectively arranged at two ends of the limiting member (3); a distance between the first limiting portion (31) and the second limiting portion (32) is equal to the first length;
S322, reducing the initial compression force until the two ends of the battery module (1) along the length direction of the battery module (1) respectively abutting against the first limiting portion (31) and the second limiting portion (32), wherein the compression force is obtained when the two ends of the battery module (1) along the length direction of the battery module (1) respectively abutting against the first limiting portion (31) and the second limiting portion (32); and the compression force is taken as the preload force.

7. The method according to claim 6, wherein, when neither of the two ends of the battery module abuts against the first limiting portion and the second limiting portion, or when only one of the two ends abuts against the respective first limiting portion or the respective second limiting portion, it is indicated that a current length of the battery module is less than the first length.

8. The method according to claim 6 or claim 7, wherein, when the two ends of the battery module respectively abut against the first limiting portion and the second limiting portion, it is indicated that a current length of the battery module is equal to the first length.

9. The method according to any one of claims 6-8, wherein each of the first limiting portion and the second limiting portion is at least one of: a limiting block, a limiting post, and a limiting plate.

10. The method according to any one of claims 6-9, wherein the distance between the first limiting portion and the second limiting portion is quantitatively adjustable to be adapted with various first lengths.

11. The method according to any one of claims 1 to 10, wherein in the S1 and the S3, the compression force is applied to each end plate of the battery module (1) to compress the battery module (1).

12. The method according to any one of claims 1 to 10, wherein the strapping band (2) comprises a steel band.

13. A method of manufacturing a battery module (1), comprising operations of:
A, measuring the preload force generated by the strapping band (2) by performing the method of determining the preload force of the battery module (1) according to claim 1; and
B, determining whether the preload force is within a predetermined range; in repose to the preload force being within the predetermined range, using the strapping band (2) to strap the battery module (1) to complete manufacturing the battery module (1); and in repose to the preload force being not within the predetermined range, adjusting a size of a cushioning pad or a size of the strapping band (2) and repeating the operation A and the operation B.

14. The method according to claim 13, wherein in the S1, the compression force applied to the battery module (1) is greater than an upper limit of the predetermined range and is less than an expansion force generated when a plurality of cells of the battery module (1) are laminated.

15. The method according to claim 13 or 14, wherein in the operation B, wherein,
when the preload force is greater than an upper limit of the predetermined range, a size of the strapping band (2) along the length direction of the battery module (1) increases; when the preload force is less than a lower limit of the predetermined range, the size of the strapping band (2) along the length direction of the battery module (1) decreases.
